# EUROPEAN PATENT APPLICATION

(11) **EP 4 325 777 A1**
(43) Date of publication of application: **21.02.2024**
(21) Application number: 22866450.4
(22) Date of filing: 26.08.2022
(51) Int. Cl.: H04L 12/46

(54) **METHOD AND DEVICE FOR ELECTING DESIGNATED FORWARDER (DF)**

(30) Priority: 11.09.2021 CN 202111065081
(71) Applicant: Huawei Technologies Co., Ltd., Longgang Shenzhen, Guangdong 518129 (CN)
(72) Inventor: ZHANG, Ye, Shenzhen, Guangdong 518129 (CN); ZHU, Tong, Shenzhen, Guangdong 518129 (CN)
(74) Representative: Goddar, Heinz J.
(86) International application number: PCT/CN2022/115177
(87) International publication number: WO 2023/035983

(57) **Abstract**

Embodiments of this application provide a DF election method and a device. The method is performed by a first network device, and the method includes: receiving an EVPN Ethernet segment ES route advertised by a second network device, where the ES route includes an ESI, the ESI identifies an Ethernet segment, and the Ethernet segment includes a first link and a second link, where the first network device and the second network device each are configured with a first broadcast domain, a first gateway accesses the first broadcast domain of the first network device through the first link, a second gateway accesses the first broadcast domain of the second network device through the second link, the first network device and the second network device each configure the ESI in the first broadcast domain, and the first gateway and the second gateway access a same EVPN site; and performing DF election based on the ES route, to determine that the first network device is a non-DF in the first broadcast domain. In this application, network resources can be saved, and network performance can be improved.

## Description

This application claims priority to Chinese Patent Application No. 202111065081.X, filed with the China National Intellectual Property Administration on September 11, 2021 and entitled "DESIGNATED FORWARDER DF ELECTION METHOD AND DEVICE", which is incorporated herein by reference in its entirety.

### TECHNICAL FIELD

This application relates to the field of communication technologies, and in particular, to a designated forwarder DF election method and a device.

### BACKGROUND

An Ethernet virtual private network (Ethernet virtual private network, EVPN) is a two-layer VPN technology. A control plane uses a multiprotocol-border gateway protocol (multiprotocol-border gateway protocol, MP-BGP) to advertise routing information. A data plane uses a virtual extensible local area network (virtual extensible local area network, VXLAN), a multi-protocol label switching (multi-protocol label switching, MPLS) network, or a segment routing internet protocol version 6 (segment routing Internet Protocol Version 6, SRv6) network to forward traffic. EVPN dual-homing is a technology that supports a customer edge (customer edge, CE) device to connect to two provider edge (provider edge, PE) devices, which can improve bandwidth utilization of a link and enhance network reliability. In EVPN dual-homed networking, to avoid a problem of loops and/or repeated sending of broadcast, unknown unicast, or multicast (broadcast, unknown unicast, or multicast, BUM) traffic, a designated forwarder (designated forwarder, DF) may be elected, to forward the traffic, from PE devices configured with a same Ethernet segment identifier (Ethernet segment identifier, ESI).

In a scenario in which a broadcast domain is dual-homed to two PEs, broadband network gateways (broadband network gateways, BNGs) connected to the two PEs in the same broadcast domain are different. Each of the two PEs is connected to at least two BNGs in the broadcast domain, and traffic exchanged in the broadcast domain is forwarded through the BNGs and the two PEs. To avoid a problem of a traffic loop or repeated sending, a DF also needs to be elected from the two PEs to forward the traffic in the broadcast domain, and a PE that is not elected as a DF does not forward the traffic exchanged in the broadcast domain. Therefore, how to implement DF election is a technical problem urgently to be resolved by a person skilled in the art.

### SUMMARY

This application provides a designated forwarder DF election method and a device, to avoid repeated forwarding of traffic in a scenario in which a broadcast domain is dual-homed to two PEs, save network resources, and improve network performance.

According to a first aspect, this application provides a designated forwarder DF election method. The method is performed by a first network device, and the method includes:
receiving an Ethernet virtual private network EVPN Ethernet segment ES route advertised by a second network device, where the EVPN ES route includes an Ethernet segment identifier ESI, the ESI identifies an Ethernet segment, and the Ethernet segment includes a first link and a second link, where the first network device and the second network device each are configured with a first broadcast domain, a first gateway accesses the first broadcast domain of the first network device through the first link, a second gateway accesses the first broadcast domain of the second network device through the second link, the first network device and the second network device each configure the ESI in the first broadcast domain, and the first gateway and the second gateway access a same EVPN site; and
performing designated forwarder DF election based on the EVPN ES route, to determine that the first network device is a non-DF in the first broadcast domain.

Optionally, the first gateway and the second gateway are broadband network gateways BNGs.

In this embodiment of this application, the ESI is configured for the BD. To be specific, the same ESI is configured in the first broadcast domain of the first network device and the first broadcast domain of the second network device, so that DF election in a scenario in which a BD is dual-homed to PEs is implemented. In this way, a problem of repeated forwarding of traffic in the scenario in which the BD is dual-homed to the PEs can be avoided. This can save bandwidth resources and processing resources of the PEs, and improve network performance.

In a possible implementation, the ESI configured by the first network device corresponds to a first priority, and the ESI configured by the second network device corresponds to a second priority. The EVPN ES route further includes the second priority.

The performing designated forwarder DF election based on the EVPN ES route includes: performing DF election based on the first priority and the second priority.

In comparison with an existing solution in which the DF election is performed based on an IP address of an ES route, in this embodiment of this application, the DF election is performed based on a priority of an ESI, and IP addresses do not need to be sorted and numbered, and therefore, efficiency of the DF election can be improved.

In a possible implementation, the EVPN ES route further includes an internet protocol IP address of the second network device and an identifier of the first broadcast domain.

The performing designated forwarder DF election based on the EVPN ES route includes: performing DF election based on an IP address of the first network device, the IP address of the second network device, and the identifier of the first broadcast domain.

In this embodiment of this application, the ES route further includes an identifier corresponding to a broadcast domain, so that ES routes of different broadcast domains can be quickly distinguished.

In a possible implementation, the method further includes: receiving a route withdrawal message that is advertised by the second network device and that is used for withdrawing the EVPN ES route, where the route withdrawal message includes the ESI; and re-performing DF election in response to receiving the route withdrawal message.

In this embodiment of this application, the route withdrawal message is used for advertising withdrawal of a route. In this way, new DF election is triggered, so that a new DF can be quickly determined to forward traffic, and reduce packet loss.

In a possible implementation, the method further includes: receiving broadcast, unknown unicast, and multicast BUM traffic from the first broadcast domain, where the BUM traffic is discarded when the first network device is the non-DF in the first broadcast domain.

In this embodiment of this application, based on the DF election implemented in the foregoing scenario in which the BD is dual-homed to the PEs, for the BUM traffic from the BD domain, a network device elected as a DF may normally forward the BUM traffic, but a network device elected as a non-DF does not forward the BUM traffic from the BD domain, and therefore, repeated forwarding of the traffic is avoided.

According to a second aspect, this application provides a network device. The network device is a first network device, and the first network device includes:
a receiving unit, configured to receive an Ethernet virtual private network EVPN Ethernet segment ES route advertised by a second network device, where the EVPN ES route includes an Ethernet segment identifier ESI, the ESI identifies an Ethernet segment, and the Ethernet segment includes a first link and a second link, where the first network device and the second network device each are configured with a first broadcast domain, a first gateway accesses the first broadcast domain of the first network device through the first link, a second gateway accesses the first broadcast domain of the second network device through the second link, the first network device and the second network device each configure the ESI in the first broadcast domain, and the first gateway and the second gateway access a same EVPN site; and
an election unit, configured to perform designated forwarder DF election based on the EVPN ES route, to determine that the first network device is a non-DF in the first broadcast domain.

In a possible implementation, the ESI configured by the first network device corresponds to a first priority, and the ESI configured by the second network device corresponds to a second priority. The EVPN ES route further includes the second priority.

The election unit is specifically configured to: perform DF election based on the first priority and the second priority.

In a possible implementation, the EVPN ES route further includes an internet protocol IP address of the second network device and an identifier of the first broadcast domain.

The election unit is specifically configured to: perform DF election based on an IP address of the first network device, the IP address of the second network device, and the identifier of the first broadcast domain.

In a possible implementation, the receiving unit is further configured to receive a route withdrawal message that is advertised by the second network device and that is used for withdrawing the EVPN ES route, where the route withdrawal message includes the ESI.

The election unit is further configured to re-perform DF election in response to receiving the route withdrawal message.

In a possible implementation, the first gateway and the second gateway are broadband network gateways BNGs.

In a possible implementation, the device further includes the following:

The receiving unit is further configured to receive broadcast, unknown unicast, and multicast BUM traffic from the first broadcast domain.

The BUM traffic is discarded when the first network device is the non-DF in the first broadcast domain.

According to a third aspect, this application provides a network device. The network device may include a processor and a memory, to implement the method described in the first aspect and the possible implementations of the first aspect. The memory is coupled to the processor. When the processor executes a computer program stored in the memory, the network device is enabled to implement the method according to the first aspect or any one of the possible implementations of the first aspect.

The device may further include a communication interface. The communication interface is used by the device to communicate with another device. For example, the communication interface may be a transceiver, a circuit, a bus, a module, or a communication interface of another type. The communication interface includes a receiving interface and a sending interface. The receiving interface is configured to receive a message. The sending interface is configured to send a message.

In a possible implementation, the device may include the following:

The memory is configured to store the computer program.

The processor is configured to: receive, through the communication interface, an Ethernet virtual private network EVPN Ethernet segment ES route advertised by a second network device, where the EVPN ES route includes an Ethernet segment identifier ESI, the ESI identifies an Ethernet segment, and the Ethernet segment includes a first link and a second link, where the first network device and the second network device each are configured with a first broadcast domain, a first gateway accesses the first broadcast domain of the first network device through the first link, a second gateway accesses the first broadcast domain of the second network device through the second link, the first network device and the second network device each configure the ESI in the first broadcast domain, and the first gateway and the second gateway access a same EVPN site; and perform designated forwarder DF election based on the EVPN ES route, to determine that the device is a non-DF in the first broadcast domain.

It should be noted that, the computer program in the memory in this application may be pre-stored, or may be downloaded from the internet and then be stored when the device is used. A source of the computer program in the memory is not specifically limited in this application. The coupling in embodiments of this application is an indirect coupling or a connection between devices, units, or modules, may be in an electrical form, a mechanical form, or another form, and is used for information exchange between the devices, the units, or the modules.

According to a fourth aspect, this application provides a computer-readable storage medium. The computer-readable storage medium stores a computer program. When the computer program is executed by a processor, the method according to the first aspect and any one of the possible implementations of the first aspect is implemented.

According to a fifth aspect, this application provides a computer program product. The computer program product includes a computer program. When the computer program is executed by a processor, the computer is enabled to perform the method according to any one of the first aspect.

It may be understood that the network device according to the second aspect and the third aspect, the computer storage medium according to the fourth aspect, and the computer program product according to the fifth aspect are all used for performing the method according to any one of the first aspect. Therefore, for beneficial effects that can be achieved, refer to beneficial effects in a corresponding method. Details are not described herein again.

### BRIEF DESCRIPTION OF DRAWINGS

The following describes the accompanying drawings needed to be used in embodiments of this application.
FIG. 1 is a schematic diagram of a scenario in which a CE is dual-homed to PEs;
FIG. 2 is a schematic diagram of a scenario in which a BD is dual-homed to PEs, to which this application is applicable;
FIG. 3 is a schematic diagram of configuration of an ESI in an existing implemented scenario in which a BD is dual-homed to PEs;
FIG. 4 is a schematic diagram of configuration of an ESI in a scenario in which a BD is dual-homed to PEs according to this application;
FIG. 5 is a schematic flowchart of a DF election method according to this application;
FIG. 6 is a schematic diagram of a logical structure of an apparatus according to this application; and
FIG. 7 is a schematic diagram of a hardware structure of an apparatus according to this application.

### DESCRIPTION OF EMBODIMENTS

The following describes the technical solutions in embodiments of this application with reference to the accompanying drawings.

First, a designated forwarder (designated forwarder, DF) election manner in embodiments of this application is described.

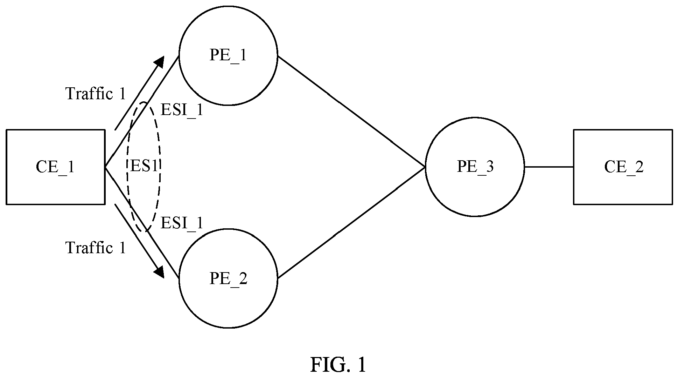

Specifically, in a scenario in which an Ethernet virtual private network (Ethernet virtual private network, EVPN) is dual-homed, to avoid a problem of loops and/or repeated sending of broadcast, unknown unicast or multicast (broadcast, unknown unicast or multicast, BUM) traffic, a DF may be elected from provider edge (provider edge, PE) devices configured with a same Ethernet segment identifier (Ethernet segment identifier, ESI), to forward the traffic. The following describes an example of the DF election manner with reference to FIG. 1.

In FIG. 1, customer edge (customer edge, CE) device_1 is dual-homed to PE_1 and PE_2. A link (or an interface) between CE_1 and PE_1 and a link (or an interface) between CE_1 and PE_2 belong to a same Ethernet segment (Ethernet segment, ES), for example, ES1. In a case in which PE_1 and PE_2 work in an active-active mode, CE_2 sends BUM traffic to PE_1 and PE_2 through PE_3, to forward the BUM traffic to CE_1. CE_1 may also send the BUM traffic to PE_1 and PE_2, to forward the BUM traffic to CE_2. To prevent a waste of network resources when a destination CE (where, if CE_1 receives traffic, CE_1 is the destination CE, and if CE_2 receives the traffic, CE_2 is the destination CE) receives duplicate traffic from PE_1 and PE_2, EVPN introduces a DF election mechanism, to be specific, a PE is designated from PE_1 and PE_2 to forward the BUM traffic. If PE_1 is elected as a DF, the BUM traffic is forwarded only through PE_1. PE_2 that is not elected becomes a non-designated forwarder (non-designated forwarder, NDF), to be specific, the BUM traffic is not forwarded through PE_2.

Specifically, because CE_1 is dual-homed to PE_1 and PE_2, an ESI may be configured on PE_1 for an interface (or a link) connecting CE_1 to PE_1, and an ESI may be configured on PE_2 for an interface (or a link) connecting CE_1 to PE_2. The two ESIs are the same, and it is assumed that the two ESIs are both ESI_1. A neighbor relationship may be established between PE_1, PE_2, and PE_3. For example, an open shortest path first (open shortest path first, OSPF) neighbor may be established, or an intermediate system to an intermediate system (intermediate system to intermediate system, ISIS) link-state routing protocol neighbor may be established, or a border gateway protocol (border gateway protocol, BGP) neighbor may be established.

Subsequently, PE_1, PE_2, and PE_3 may send ES routes to each other, for example, may send the respective ES routes in a flooding manner. The ES route includes information such as an ESI configured for each PE and an internet protocol (internet protocol, IP) address of each PE. The IP address may be an IP address configured based on a public network, or may be an address configured based on an EVPN (where the address may be referred to as an EVPN source IP address). Each PE obtains, based on a received ES route, an IP address in routing information corresponding to an ESI that is the same as an ESI configured for the PE, and the DF is selected based on the obtained IP address.

For example, PE_1 is used as an example. PE_1 receives an ES route 1 of PE_2 and an ES route 2 of PE_3, where the ES route 1 includes ESI_1 and an IP address of PE_2, and the ES route 2 includes ESI_2 and an IP address of PE_3. Only the ESI included in the ES route ofPE_2 is the same as an ESI configured in PE_1, and both are ESI_1. Therefore, PE_1 obtains the IP address (for example, 2.2.2.2) of PE_2 and the IP address (for example, 1.1.1.1) of PE_1, and then sorts the two IP addresses in ascending order, and allocates sequence numbers. 1.1.1.1 is less than 2.2.2.2. Therefore, a sequence number allocated to 1.1.1.1 is 0, or the sequence number allocated to PE_1 is 0, and a sequence number allocated to 2.2.2.2 is 1, or the sequence number allocated to PE_2 is 1. Existing DF election includes interface-based DF election and virtual local area network (virtual local area network, VLAN)-based DF election. Specific implementations of the two types of DF election are different, which are separately described below.

If the interface-based DF election is performed, a PE with a smaller IP address is selected as the DF, to be specific, PE_1 is selected as the DF to forward the BUM traffic exchanged between CE_1 and CE_2, and PE_2 is an NDF.

If the VLAN-based DF election is performed, the foregoing ES route further includes a VLAN ID of a VLAN corresponding to the ES. It is assumed that the VLAN ID is represented by V, a sequence number of a PE device serving as the DF is calculated according to a formula: (V mod N) = i, where i represents the sequence number of the PE, N is a quantity of PEs to which the CE is multi-homed, and N is 2 in a dual-homing scenario. If the ID of the VLAN corresponding to ES1 is 10, i is 0 after calculation according to the foregoing formula. In this case, PE_1 is selected as the DF to forward the BUM traffic exchanged between CE_1 and CE_2, and PE_2 is the NDF.

After PE_1 is elected as the DF and PE_2 is elected as the NDF, and after PE_3 receives the BUM traffic from CE_2, PE_3 makes one copy of the BUM traffic and sends one copy to PE_1 and the other copy to PE_2. Because PE_1 is the DF, PE_1 normally forwards the BUM traffic to CE_1. Because PE_2 is the NDF, after receiving the BUM traffic, PE_2 discards the BUM traffic instead of forwarding the BUM traffic. In addition, PE_1 and PE_2 work in the active-active mode. Therefore, CE_1 sends the BUM traffic to PE_1 and PE_2. PE_1 functioning as the DF normally forwards the BUM traffic. After receiving the BUM traffic, PE_2 functioning as the NDF discards the BUM traffic instead of forwarding the BUM traffic.

If a state of an interface connecting PE1_1, which serves as the DF, and CE_1 is a down (Down) state, PE_1 becomes the NDF, and PE_2 becomes the DF. If the state of the interface connecting PE_1 and CE_1 is an up (Up) state, PE_1 and PE_2 perform DF election again. For a specific process of the DF election, refer to the foregoing description.

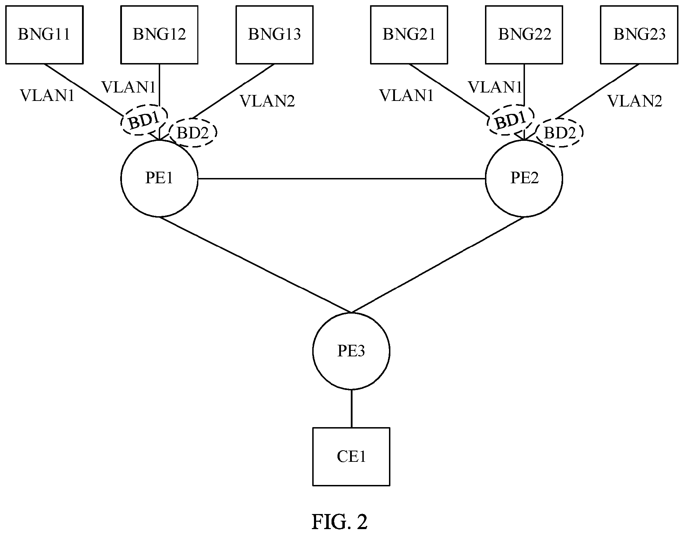

For better understanding of embodiments of this application, the following first describes an example of a scenario to which embodiments of this application are applicable. Refer to FIG. 2.

As shown in FIG. 2, a network architecture may include a plurality of PEs. PE1, PE2, and PE3 are used as examples in the figure. PE1, PE2, and PE3 may communicate with each other. For example, a neighbor relationship may be established between PE1, PE2, and PE3. For example, an OSPF neighbor, an ISIS link-state routing protocol neighbor, or a BGP neighbor may be established.

Information about one or more broadcast domains (broadcast domains, BDs) is configured in PE1, and PE1 may communicate with the one or more BDs. PE1 may communicate with the BD means that PE1 may forward traffic to a broadband network gateway (broadband network gateway, BNG) in the BD, and the BNG in the BD may also send traffic to PE1. The figure illustrates an example in which PE1 can communicate with BD1 and BD2. BD1 may be a range covered by VLAN1, and BD2 may be a range covered by VLAN2. For example, both BNG11 and BNG12 that are in BD1 are connected to PE1, and BNG13 in BD2 is connected to PE1.

Similarly, information about one or more BDs is configured in PE2, and PE2 may communicate with the one or more BDs. PE2 may communicate with the BD means that PE2 may forward traffic to a BNG in the BD, and the BNG in the BD may also send traffic to PE2. The figure illustrates an example in which PE2 can communicate with BD1 and BD2. For example, both BNG21 and BNG22 that are in BD1 are connected to PE2, and BNG23 in BD2 is connected to PE2.

The foregoing scenario in which different BNGs in a same BD are connected to PE1 and PE2 may be referred to as a scenario in which the BD is dual-homed to PE1 and PE2. For example, BNG11 and BNG12 that are in BD1 are connected to PE1, and BNG21 and BNG22 that are in BD1 are connected to PE2. In this case, it can be said that BD1 is dual-homed to PE1 and PE2. For example, BNG13 in BD2 is connected to PE1, and BNG23 in BD2 is connected to PE2. In this case, it can be said that BD2 is dual-homed to PE1 and PE2.

PE3 may be connected to one or more CEs for communication, and one CE1 is used as an example in the figure.

PE1, PE2, and PE3 may be configured to forward traffic exchanged between the BNG in BD1 and CE1 (or between the BNG in BD2 and CE1). The BNG also belongs to a CE.

The CE is a user-end router or switch connected to a service provider, and provides service access for a user by connecting one or more PEs. The PE may also be a router or a switch, and is configured to connect the CE and a backbone network device of an operator.

In the foregoing BNGs connected to PE1 and PE2, the BNGs belonging to the same BD may communicate with a same site (site) or host that is on a user side in a VLAN corresponding to the BD. For example, BD1, BNG11, BNG12, BNG21, and BNG22 may all communicate with a same site or host that is on a user side. For another example, BD2, BNG13 and BNG23 may also communicate with a same site or host that is on a user side.

A network in which PE1, PE2, and PE3 are located may be a network in which segment routing (segment routing, SR) is applied to an internet protocol Version 6 (Internet Protocol Version 6, IPv6) data plane, and may be referred to as an SRv6 network.

Alternatively, a network in which PE1, PE2, and PE3 are located may be a network in which SR is applied to a multi-protocol label switching (Multi-Protocol Label Switching, MPLS) data plane, and may be referred to as an SR-MPLS network.

Alternatively, a network in which PE1, PE2, and PE3 are located may be a virtual extensible local area network (virtual extensible local area network, VXLAN).

It should be noted that, the network architecture shown in FIG. 2 is merely an example. A network architecture to which the designated forwarder DF election method provided in embodiments of this application is applicable is not limited to the foregoing description. Any scenario to which the designated forwarder DF election method provided in embodiments of this application is applied, for example, a scenario in which a BD is dual-homed to PEs, is a scenario to which embodiments of this application are applicable. Details are not described herein again.

Before the designated forwarder DF election method provided in embodiments of this application is described, a problem in the scenario in which the BD is dual-homed to the PEs is first described as an example.

The scenario in which BD1 is dual-homed to PE1 and PE2 is used as an example, as shown in FIG. 2. BNG11, BNG12, BNG21, and BNG22 that are in BD1 may all be configured to forward traffic from a user host. To avoid repeated forwarding of the traffic, a DF may be elected from PE1 and PE2 to which BD1 is dual-homed, to forward the traffic exchanged between the BNG in BD1 and CE 1.

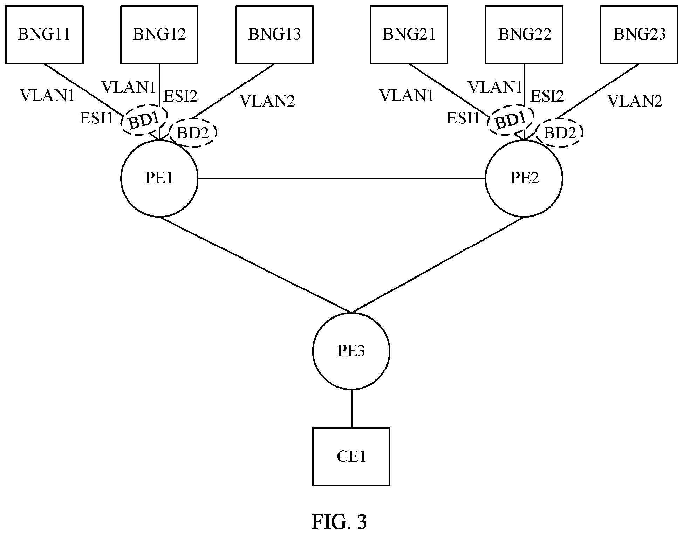

In an existing solution, because two interfaces that are respectively used by BNG11 and BNG12 to connect to PE1 are both main interfaces, a same ESI cannot be configured. Similarly, two interfaces that are respectively used by BNG21 and BNG22 to connect to PE2 are also main interfaces, and a same ESI cannot be configured either. Because BD1 is dual-homed to PE1 and PE2, a same ESI (for example, ESI1) may be configured for an interface that is used by BNG11 to connect to PE1 and an interface that is used by BNG21 to connect to PE2. Similarly, a same ESI (for example, ESI2) may be configured for an interface that is used by BNG12 to connect to PE1 and an interface that is used by BNG22 to connect to PE2. For example, for ease of understanding, refer to configuration of an ESI in FIG. 3. FIG. 3 is obtained by adding an identifier of the ESI based on FIG. 2. Therefore, the foregoing description of FIG. 2 is applicable to FIG. 3.

It can be learned from the foregoing description that, regardless of an interface-based DF election manner or a VLAN-based election manner, the ES route sent by the PE includes one ESI configured for the interface connecting the CE to the PE. However, in a case of the configuration of the ESI shown in FIG. 3, because different ESIs are configured for the two interfaces respectively connecting BNG11 and BNG12 belonging to BD1 to PE1, to be specific, BNG11 and BNG12 are considered as one CE, two different ESIs are configured for the interface connecting the CE to PE1. In a conventional technology, there is no solution for implementing DF election in this case. However, to avoid repeated forwarding of the BUM traffic exchanged between the BNG in BD1 and CE1, a DF needs to be elected from PE1 and PE2. Therefore, an embodiment of this application provides a designated forwarder DF election method.

The following describes the designated forwarder DF election method provided in embodiments of this application.

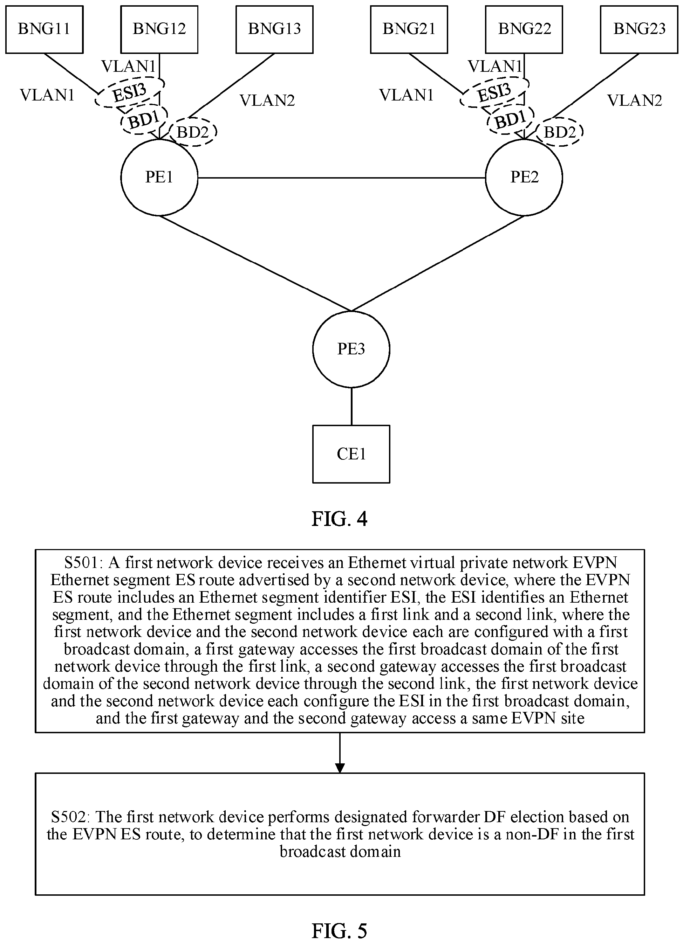

Based on the foregoing description, in the scenario shown in FIG. 3, in the existing solution, DF election between PE1 and PE2 cannot be implemented, to avoid the repeated forwarding of the traffic between the BNG in BD1 and CE1. To resolve this problem, to be specific, to implement the DF election between PE1 and PE2 in the scenario shown in FIG. 3, to avoid the repeated forwarding of the traffic between the BNG in BD1 and CE1, in this embodiment of this application, a same ESI may be configured in BD1 in PE1 and BD1 in PE2. For ease of description, it is assumed that the same ESI is ESI3. For example, for a case in which the same ESI is configured in BD1 in PE1 and BD1 in PE2, refer to FIG. 4. As shown in FIG. 4, the same Ethernet segment identifier ESI3 is configured for BD1 in PE1 and BD1 in PE2.

In PE1 and PE2, ESI3 is bound to BD1, and ESI3 is valid only for BD1. It should be noted that, the configured ESI3 is different from ESI1 and ESI2 that are configured for the interfaces described above. Optionally, in PE1 and PE2, ESI1, ESI2, and ESI3 may all be configured. However, for a case in which an ESI is configured for an interface and an ESI is configured for a BD, during the DF election, the ESI configured for the BD is selected for the DF election, and the ESI configured for the interface is ignored. A DF election manner for the ESI configured for the BD may be referred to as BD-based DF election.

Based on that the same ESI3 is configured for BD1 in PE1 and BD1 in PE2, the BD-based DF election can be performed between PE1 and PE2. Specifically, PE1 may generate an ES route A, where the ES route A includes ESI3 valid for BD1 and an IP address of PE1. Subsequently, PE1 sends the ES route A to PE2, or certainly may send the ES route A to PE3. Similarly, PE2 may generate an ES route B, where the ES route B includes ESI3 valid for BD1 and an IP address of PE2. Subsequently, PE2 sends the ES route B to PE1, or certainly may send the ES route B to PE3.

After receiving the ES route B from PE2, PE1 performs DF election according to a preset DF election rule. Similarly, after receiving the ES route A from PE1, PE2 performs DF election according to the preset DF election rule. For example, the preset DF election rule may be the interface-based DF election rule described above, to be specific, a PE with a smaller IP address is selected as a DF, or may be another preset rule. This is not limited in embodiments of this application.

It is assumed that a DF election result is that PE1 is elected as the DF, and PE2 is elected as an NDF. After receiving traffic sent to BD1, PE3 makes one copy of the traffic and sends one copy to PE1 and the other copy to PE2. Because PE1 is the DF, PE1 normally forwards the traffic to the BNG in BD1. Because PE2 is the NDF, after receiving the traffic, PE2 discards the traffic instead of forwarding the traffic.

The traffic received by PE1 from PE3 may be traffic sent by CE1 to a host in BD1. After receiving the traffic, PE1 may send the traffic to BNG11 and BNG12. Both BNG11 and BNG12 may forward the traffic to a site or the host in BD1. However, to avoid repeated forwarding of the traffic, one of BNG11 and BNG12 may be selected as an active forwarding device to forward the traffic, and the other is a standby forwarding device.

Optionally, after PE1 sends a first packet to BNG11 and BNG12, BNG11 and BNG12 each may send a reply message (for example, an ACK packet) to PE1. A BNG whose reply message first arrives at PE1 is selected as the active forwarding device. If the reply message sent by BNG11 first arrives at PE1, PE1 selects BNG11 as the active forwarding device, and BNG12 becomes the standby forwarding device. If the reply message sent by BNG12 first arrives at PE1, PE1 selects BNG12 as the active forwarding device, and BNG11 becomes the standby forwarding device. The first packet may be a first packet sent by CE1 to the foregoing host, or may be a control packet generated by PE1 for selecting an active BNG and a standby BNG, or the like. This is not limited in embodiments of this application.

After PE1 determines the active forwarding device, subsequently received traffic sent by CE1 to the foregoing site or host is sent only to the active forwarding device, and is not sent to the standby forwarding device. In addition, PE1 may normally forward traffic from the active forwarding device, and PE1 discards traffic received from the standby forwarding device instead of forwarding the traffic, to avoid a problem of repeated sending.

In addition, after the DF election, both PE1 and PE2 can receive the traffic from the BNG in BD1. For PE1, because PE1 is a DF elected based on BD1, PE1 may normally forward the traffic to PE3. For PE2, because PE2 is an NDF elected based on BD1, PE2 discards the traffic instead of forwarding the traffic.

It should be noted that, the traffic from BD1, regardless of whether PE1 receives the traffic from BNG11 or BNG12, is normally forwarded by PE1, as long as the traffic belongs to BD1. Similarly, for PE2, regardless of whether PE2 receives the traffic from BNG21 or BNG22, PE1 discards the traffic instead of forwarding the traffic, as long as the traffic belongs to BD1.

In a possible implementation, the ES route A generated by PE1 and the ES route B generated by PE2 may further include an ID of VLAN1 corresponding to BD1 or an ID of BD1, to identify that the ES route is an ES route sent for BD1. The ID of VLAN1 identifies VLAN1. The ID of BD1 identifies BD1. Optionally, in this implementation, for a rule of performing DF election by the PE, refer to the VLAN-based DF election rule described above, in other words, the DF is calculated using the foregoing calculation formula (V mod N) = i. In embodiments of this application, V may be an ID of a VLAN or an ID of a BD.

Optionally, the foregoing DF election rule may be a priority-based DF election rule. Specifically, priority information of an ESI is added to the ES route sent by the PE, and the DF is preferentially determined based on the priority information.

For example, in the scenario shown in FIG. 4, priority information may be configured for ESI3 configured in each of PE1 and PE2. A priority configured for ESI3 in PE1 may be the same as or different from a priority configured for ESI3 in PE2. Specifically, the priority information is configured based on an actual situation. Based on this, the ES route A generated by PE1 and the ES route B generated by PE2 may further include the priority information of ESI3. It is assumed that the priority information of ESI3 included in the ES route A is first priority information, and the priority information of ESI3 included in the ES route B is second priority information. In this case, when the DF election is performed, PE1 and PE2 first need to check priorities of ESI3 configured on the two devices. If a first priority is higher than a second priority, PE1 is elected as the DF, and PE2 is elected as the NDF. On the contrary, if the second priority is higher than the first priority, PE2 is elected as the DF, and PE1 is elected as the NDF. If the second priority is equal to the first priority, the priority information may be ignored, and the DF election is performed based on information such as the IP address of the PE described above.

Alternatively, in addition to the priority information of ESI3, the ES route A and the ES route B each may further include indication information indicating whether a peer end preempts the DF. For example, the ES route includes a Don't Preempt (Don't Preempt, DP) bit. If the DP bit is 0, it indicates that a peer end PE may be in a "preempt a DF" state, or may be in a "don't preempt DF" state. If DP = 1, it indicates that the peer end is in a "not allowed to preempt a DF" state. In this case, the DF election is still performed based on the priority. The DP bit is considered only when the second priority is equal to the first priority. If a DP bit in the ES route A is 1, it indicates that PE2 receiving the ES route A is in the "not allowed to preempt a DF" state. If a DP bit in the ES route B is 0, it indicates that PE1 receiving the ES route B may be in the "preempt a DF" state or may be in the "don't preempt a DF" state. In this case, PE1 is elected as the DF, and PE2 is elected as the NDF. If the ES route A and the ES route B include same DP bits, information of the DP bit may be not considered, and the DF election may be performed based on information such as the IP address of the PE described above.

It should be noted that, the DF election rule described above is merely an example, and does not constitute a limitation on embodiments of this application.

In a possible implementation, it is assumed that the active forwarding device selected for PE1 from BNG11 and BNG12 is BNG11. After the DF election determines that PE1 is the DF and PE2 is the NDF, if a link between the active forwarding device BNG11 and PE1 fails, BNG12 becomes the active forwarding device. PE1 sends traffic received from PE3 to BNG12 for forwarding. If a link between BNG12 and PE1 also fails, and PE1 perceives that PE1 cannot forward the traffic from PE3 to the BNG in BD1, PE1 sends a route withdrawal message to PE2. The route withdrawal message includes ESI3 valid for BD1, the IP address of PE1, and an identifier indicating route withdrawal. The identifier indicating the route withdrawal may be, for example, MP_UNREACH_NLRI in a Path attribute field of the route withdrawal message. The identifier indicating the route withdrawal is not limited in embodiments of this application. After receiving the route withdrawal message, PE2 deletes a route corresponding to ESI3, and then re-performs DF election. Because this case is in a dual-homing scenario, and PE2 has only its own ES route that includes ESI3, after the DF election, PE2 is determined as an active DF. In addition, PE1 becomes the NDF. Based on this, after receiving traffic sent to BD1, PE3 makes one copy of the traffic and sends one copy to PE1 and the other copy to PE2. Because PE2 is the DF, PE2 normally forwards the traffic to the BNG in BD1. Because the link between PE1 and BNG11 and the link between PE1 and BNG12 fail, and PE1 becomes the NDF, after receiving the traffic, PE1 discards the traffic instead of forwarding the traffic.

In addition, because PE2 has become the DF, PE2 may forward the traffic from BNG21 or BNG22. However, similarly, to avoid repeated forwarding of the traffic, PE2 may select an active forwarding device and a standby forwarding device from BNG21 and BNG22. For a specific selection process, refer to the foregoing description of selecting the active forwarding device and the standby forwarding device from BNG11 and BNG12 by PE1. Details are not described herein again.

After PE2 becomes the DF, a forwarding function implemented by PE2 is the same as a forwarding function implemented when PE1 is the DF, and reference may be made to the foregoing related description. Details are not described herein again.

In a possible implementation, the foregoing route withdrawal message may further include the ID of VLAN1 corresponding to BD1 or the ID of BD1, to identify that the route withdrawal message is an ES route withdrawal message sent for BD1.

In a possible implementation, if communication through the foregoing link between BNG11 and/or BNG12 and PE1 recovers, PE1 regenerates the foregoing ES route A, and sends the ES route Ato PE2. After receiving the ES route A, PE2 triggers a new DF election operation, and PE1 also re-performs a DF election operation. For a specific implementation of the DF election, refer to the foregoing description. Details are not described herein again. Because IP addresses of PE1 and PE2 do not change (where, optionally, the ID of VLAN1 or the ID of BD1 does not change either), a re-election result is still that PE1 is elected as the DF, and PE2 is elected as the NDF, to be specific, the traffic exchanged between the BNG in BD1 and CE1 is re-directed to PE1 for forwarding. For a subsequent specific implementation, refer to the corresponding description used when PE1 is the DF and PE2 is the NDF. Details are not described herein again.

In addition, the foregoing description mainly uses BD1 in FIG. 4 as an example. The foregoing DF election method provided in embodiments of this application is also applicable to DF election performed in BD2 in FIG. 4. To be specific, a same ESI is configured in BD2 of PE1 and BD2 of PE2, and then the DF election is performed based on the ESI in BD2. An elected DF is used for forwarding traffic exchanged in BD2. For a specific implementation, refer to the related description of BD1. Details are not described herein again.

FIG. 5 is a schematic flowchart of a designated forwarder DF election method according to an embodiment of this application. The method may include but is not limited to the following steps.

S501: A first network device receives an Ethernet virtual private network EVPN Ethernet segment ES route advertised by a second network device, where the EVPN ES route includes an Ethernet segment identifier ESI, the ESI identifies an Ethernet segment, and the Ethernet segment includes a first link and a second link, where the first network device and the second network device each are configured with a first broadcast domain, a first gateway accesses the first broadcast domain of the first network device through the first link, a second gateway accesses the first broadcast domain of the second network device through the second link, the first network device and the second network device each configure the ESI in the first broadcast domain, and the first gateway and the second gateway access a same EVPN site.

S502: The first network device performs designated forwarder DF election based on the EVPN ES route, to determine that the first network device is a non-DF in the first broadcast domain.

Specifically, the first network device may be PE2 described based on FIG. 3 and FIG. 4. The second network device may be PE1 described based on FIG. 3 and FIG. 4. The first gateway and the second gateway may be the BNGs described based on FIG. 3 and FIG. 4. The ESI may be ESI3 described based on FIG. 3 and FIG. 4. The first broadcast domain may be BD1 described based on FIG. 3 and FIG. 4. For specific implementations of S501 and S502, refer to related descriptions based on FIG. 3 and FIG. 4. Details are not described herein again.

In conclusion, in this embodiment of this application, an ESI is configured for a BD. For example, a same ESI is configured for interfaces respectively connecting PE1 and PE2 to the BNGs in BD1, so that DF election in a scenario in which the BD is dual-homed to PEs is implemented. In this way, a problem of repeated forwarding of traffic in the scenario in which the BD is dual-homed to the PEs can be avoided. This can save bandwidth resources and processing resources of the PEs, and improve network performance.

The foregoing mainly describes the DF election method provided in embodiments of this application. It may be understood that, to implement the foregoing functions, each device includes corresponding hardware structures and/or corresponding software modules for performing the functions. With reference to the units and steps described in the examples in embodiments disclosed in this specification, this application can be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the device may be divided into functional modules based on the foregoing method examples. For example, each functional module may be obtained through division based on each corresponding function, or two or more functions may be integrated into one module. The integrated module may be implemented in a form of hardware, or may be implemented in a form of a software functional module. It should be noted that, in embodiments of this application, division into modules is an example, and is merely a logical function division. In an actual implementation, there may be another division manner.

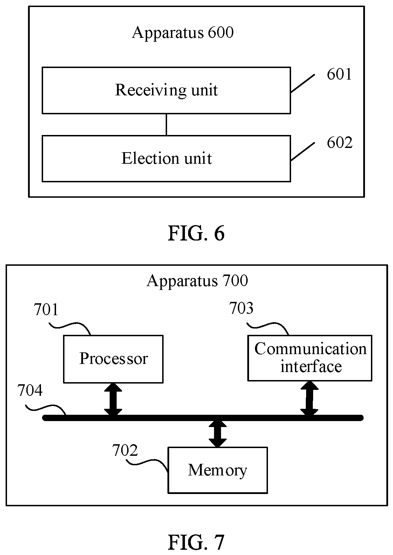

When each functional module is obtained through division based on each corresponding function, FIG. 6 is a schematic diagram of a possible logical structure of an apparatus. The apparatus may be the foregoing PE elected as the NDF, or may be a chip in the PE, or may be a processing system in the PE, or the like. The apparatus 600 includes a receiving unit 601 and an election unit 602. Details are as follows:

The receiving unit 601 is configured to receive an Ethernet virtual private network EVPN Ethernet segment ES route advertised by a second network device, where the EVPN ES route includes an Ethernet segment identifier ESI, the ESI identifies an Ethernet segment, and the Ethernet segment includes a first link and a second link, where the first network device and the second network device each are configured with a first broadcast domain, a first gateway accesses the first broadcast domain of the first network device through the first link, a second gateway accesses the first broadcast domain of the second network device through the second link, the first network device and the second network device each configure the ESI in the first broadcast domain, and the first gateway and the second gateway access a same EVPN site.

The election unit 602 is configured to perform designated forwarder DF election based on the EVPN ES route, to determine that the apparatus is a non-DF in the first broadcast domain.

In a possible implementation, the ESI configured by the first network device corresponds to a first priority, and the ESI configured by the second network device corresponds to a second priority. The EVPN ES route further includes the second priority.

The election unit 602 is specifically configured to: perform DF election based on the first priority and the second priority.

In a possible implementation, the EVPN ES route further includes an internet protocol IP address of the second network device and an identifier of the first broadcast domain.

The election unit 602 is specifically configured to: perform DF election based on an IP address of the first network device, the IP address of the second network device, and the identifier of the first broadcast domain.

In a possible implementation, the receiving unit 601 is further configured to receive a route withdrawal message that is advertised by the second network device and that is used for withdrawing the EVPN ES route, where the route withdrawal message includes the ESI.

The election unit 602 is further configured to re-perform DF election in response to receiving the route withdrawal message.

In a possible implementation, the first gateway and the second gateway are broadband network gateways BNGs.

In a possible implementation, the device further includes the following:

The receiving unit 601 is further configured to receive broadcast, unknown unicast, and multicast BUM traffic from the first broadcast domain.

The BUM traffic is discarded when the first network device is the non-DF in the first broadcast domain.

For specific operations and beneficial effects of each unit of the apparatus 600 shown in FIG. 6, refer to corresponding descriptions in FIG. 4 and the possible method embodiments of FIG. 4. Details are not described herein again.

FIG. 7 is a schematic diagram of a possible hardware structure of an apparatus according to this application. The apparatus may be the PE elected as the NDF in the foregoing embodiments, or may be a chip in the PE, or may be a processing system in the PE, or the like. The apparatus 700 includes a processor 701, a memory 702, and a communication interface 703. The processor 701, the communication interface 703, and the memory 702 may be connected to each other, or may be connected to each other through a bus 704.

For example, the memory 702 is configured to store a computer program and data that are of the apparatus 700. The memory 702 may include but not limited to a random access memory (random access memory, RAM), a read-only memory (read-only memory, ROM), an erasable programmable read-only memory (erasable programmable read-only memory, EPROM), a portable read-only memory (compact disc read-only memory, CD-ROM), and the like.

The communication interface 703 includes a sending interface and a receiving interface. There may be a plurality of communication interfaces 703, which are configured to support the apparatus 700 in performing communication, for example, receiving or sending data or a message.

For example, the processor 701 may be a central processing unit, a general-purpose processor, a digital signal processor, an application-specific integrated circuit, a field programmable gate array or another programmable logic device, a transistor logic device, a hardware component, or any combination thereof. The processor may alternatively be a combination implementing a computing function, for example, a combination of one or more microprocessors, or a combination of a digital signal processor and a microprocessor. The processor 701 may be configured to read the program stored in the memory 702, to enable the apparatus 700 to perform the operations performed by the PE elected as the NDF in the DF election method in FIG. 4 and the possible embodiments of FIG. 4.

In a possible implementation, the processor 701 may be configured to read the program stored in the memory 702, to perform the following operations. The processor 701 is configured to: receive, through the communication interface 703, an Ethernet virtual private network EVPN Ethernet segment ES route advertised by a second network device, where the EVPN ES route includes an Ethernet segment identifier ESI, the ESI identifies an Ethernet segment, and the Ethernet segment includes a first link and a second link, where the first network device and the second network device each are configured with a first broadcast domain, a first gateway accesses the first broadcast domain of the first network device through the first link, a second gateway accesses the first broadcast domain of the second network device through the second link, the first network device and the second network device each configure the ESI in the first broadcast domain, and the first gateway and the second gateway access a same EVPN site; and perform designated forwarder DF election based on the EVPN ES route, to determine that the apparatus is a non-DF in the first broadcast domain.

For specific operations and beneficial effects of each unit of the apparatus 700 shown in FIG. 7, refer to corresponding descriptions in FIG. 4 and the possible method embodiments of FIG. 4. Details are not described herein again.

An embodiment of this application further provides a computer-readable storage medium. The computer-readable storage medium stores a computer program. The computer program is executed by a processor to implement the operations performed by the PE elected as the NDF in the method in FIG. 4 and any one of the possible method embodiments of FIG. 4.

An embodiment of this application further provides a computer program product. When the computer program product is read and executed by a computer, the operations performed by the PE elected as the NDF in the method in FIG. 4 and any one of the possible method embodiments of FIG. 4 is performed.

In conclusion, in this embodiment of this application, an ESI is configured for a BD. To be specific, a same ESI is configured in a first broadcast domain of the foregoing first network device and a first broadcast domain of the foregoing second network device, so that DF election in a scenario in which the BD is dual-homed to PEs is implemented. In this way, a problem of repeated forwarding of traffic in the scenario in which the BD is dual-homed to the PEs can be avoided. This can save bandwidth resources and processing resources of the PEs, and improve network performance.

In this application, terms such as "first" and "second" are used for distinguishing same items or similar items that have basically same effects and functions. It should be understood that there is no logical or time sequence dependency between "first", "second", and "n^{th}". A quantity and an execution sequence are also not limited. It should also be further understood that although terms such as "first" and "second" are used in the following descriptions for describing various elements, these elements should not be limited by the terms. These terms are merely used for distinguishing one element from another element. For example, without departing from the scope of the various examples, a first image may be referred to as a second image, and similarly, a second image may be referred to as a first image. Both the first image and the second image may be images, and in some cases, may be separate and different images.

It should be further understood that a sequence number of each process does not mean an execution sequence in embodiments of this application. The execution sequence of each process should be determined based on functions and internal logic of the process, and should not constitute any limitation on the implementation processes of embodiments of this application.

It should be further understood that the term "include" (also referred to as "includes", "including", "comprises", and/or "comprising") used in this specification specifies presence of the stated features, integers, steps, operations, elements, and/or components, but not excludes presence or addition of one or more other features, integers, steps, operations, elements, components, and/or combinations thereof.

It should be further understood that "one embodiment", "an embodiment", or "a possible implementation" mentioned throughout this specification means that particular features, structures, or characteristics related to embodiments or implementations are included in at least one embodiment of this application. Therefore, "in one embodiment", "in an embodiment", or "in a possible implementation" appearing throughout this specification does not necessarily mean a same embodiment. In addition, these particular features, structures, or characteristics may be combined in one or more embodiments in any appropriate manner.

Finally, it should be noted that, the foregoing embodiments are merely intended for describing the technical solutions of this application other than limiting this application. Although this application is described in detail with reference to the foregoing embodiments, a person of ordinary skill in the art should understand that modifications may still be made to the technical solutions described in the foregoing embodiments or equivalent replacements may be made to some or all technical features thereof. However, these modifications or replacements do not cause the essence of corresponding technical solutions to depart from the scope of the technical solutions of embodiments of this application.

## Claims

1. A designated forwarder DF election method, wherein the method is performed by a first network device, and the method comprises:
receiving an Ethernet virtual private network EVPN Ethernet segment ES route advertised by a second network device, wherein the EVPN ES route comprises an Ethernet segment identifier ESI, the ESI identifies an Ethernet segment, and the Ethernet segment comprises a first link and a second link, wherein the first network device and the second network device each are configured with a first broadcast domain, a first gateway accesses the first broadcast domain of the first network device through the first link, a second gateway accesses the first broadcast domain of the second network device through the second link, the first network device and the second network device each configure the ESI in the first broadcast domain, and the first gateway and the second gateway access a same EVPN site; and
performing designated forwarder DF election based on the EVPN ES route, to determine that the first network device is a non-DF in the first broadcast domain.

2. The method according to claim 1, wherein the ESI configured by the first network device corresponds to a first priority, and the ESI configured by the second network device corresponds to a second priority; and the EVPN ES route further comprises the second priority; and
the performing designated forwarder DF election based on the EVPN ES route comprises:
performing DF election based on the first priority and the second priority.

3. The method according to claim 1 or 2, wherein the EVPN ES route further comprises an internet protocol IP address of the second network device and an identifier of the first broadcast domain; and
the performing designated forwarder DF election based on the EVPN ES route comprises:
performing DF election based on an IP address of the first network device, the IP address of the second network device, and the identifier of the first broadcast domain.

4. The method according to any one of claims 1 to 3, wherein the method further comprises:
receiving a route withdrawal message that is advertised by the second network device and that is used for withdrawing the EVPN ES route, wherein the route withdrawal message comprises the ESI; and
re-performing DF election in response to receiving the route withdrawal message.

5. The method according to any one of claims 1 to 4, wherein the first gateway and the second gateway are broadband network gateways BNGs.

6. The method according to any one of claims 1 to 5, wherein the method further comprises:
receiving broadcast, unknown unicast, and multicast BUM traffic from the first broadcast domain, wherein
the BUM traffic is discarded when the first network device is the non-DF in the first broadcast domain.

7. A network device, wherein the network device is a first network device, and the first network device comprises:
a receiving unit, configured to receive an Ethernet virtual private network EVPN Ethernet segment ES route advertised by a second network device, wherein the EVPN ES route comprises an Ethernet segment identifier ESI, the ESI identifies an Ethernet segment, and the Ethernet segment comprises a first link and a second link, wherein the first network device and the second network device each are configured with a first broadcast domain, a first gateway accesses the first broadcast domain of the first network device through the first link, a second gateway accesses the first broadcast domain of the second network device through the second link, the first network device and the second network device each configure the ESI in the first broadcast domain, and the first gateway and the second gateway access a same EVPN site; and
an election unit, configured to perform designated forwarder DF election based on the EVPN ES route, to determine that the first network device is a non-DF in the first broadcast domain.

8. The first network device according to claim 7, wherein the ESI configured by the first network device corresponds to a first priority, and the ESI configured by the second network device corresponds to a second priority; and EVPN ES route further comprises the second priority; and
the election unit is specifically configured to:
perform DF election based on the first priority and the second priority.

9. The first network device according to claim 6 or 7, wherein the EVPN ES route further comprises an internet protocol IP address of the second network device and an identifier of the first broadcast domain; and
the election unit is specifically configured to:
perform DF election based on an IP address of the first network device, the IP address of the second network device, and the identifier of the first broadcast domain.

10. The first network device according to any one of claims 7 to 9, wherein
the receiving unit is further configured to receive a route withdrawal message that is advertised by the second network device and that is used for withdrawing the EVPN ES route, wherein the route withdrawal message comprises the ESI; and
the election unit is further configured to re-perform DF election in response to receiving the route withdrawal message.

11. The first network device according to any one of claims 7 to 10, wherein the first gateway and the second gateway are broadband network gateways BNGs.

12. The first network device according to any one of claims 7 to 11, wherein the device further comprises the following:
the receiving unit is further configured to receive broadcast, unknown unicast, and multicast BUM traffic from the first broadcast domain, wherein
the BUM traffic is discarded when the first network device is the non-DF in the first broadcast domain.

13. A network device, comprising a processor and a memory, wherein the memory is configured to store a computer program, and the processor is configured to invoke the computer program, to enable the network device to perform the method according to any one of claims 1 to 6.

14. A computer-readable storage medium, wherein the computer-readable storage medium stores a computer program; and when the computer program is executed by a processor, the method according to any one of claims 1 to 6 is implemented.

15. A computer program product, comprising a computer program, wherein when the computer program is executed by a processor, the method according to any one of claims 1 to 6 is implemented.
